# EUROPEAN PATENT APPLICATION

(11) **EP 3 258 033 A1**
(43) Date of publication of application: **20.12.2017**
(21) Application number: 16382282.8
(22) Date of filing: 17.06.2016
(51) Int. Cl.: E04G 17/065, F16B 21/02, F16B 5/10

(54) **ANCHOR FOR A VERTICAL FORMWORK AND VERTICAL FORMWORK**

(71) Applicant: ULMA C y E, S. COOP., 20560 Oñati (Guípuzcoa) (ES)
(72) Inventor: COLINO VEGA, Manuel, 01015 VITORIA - GASTEIZ (ES)
(74) Representative: Igartua, Ismael

(57) **Abstract**

Anchor for a vertical formwork, comprising a fixed part (20) suitable for being fixed to a formwork panel and fixing means for fixing said fixed part (20) to the formwork panel. The fixing means comprise a fixing key (22) suitable for being housed in a hole of the formwork panel, the fixing key (22) comprising an off-centered stop (220) with respect to the axis of rotation of the fixing key (22), such that in a first angular position the off-centered stop (220) of the fixing key (22) can be introduced in the hole of the formwork panel and in a second angular position the off-centered stop (220) is retained by the formwork panel, and therefore the anchor (2) is fixed to the formwork panel.

## Description

### TECHNICAL FIELD

The present invention relates to an anchor for a vertical formwork and to a vertical formwork.

### PRIOR ART

The use of vertical formworks for making vertical structures, such as walls, is known. Vertical formworks comprise formwork panels arranged facing one another and fixed to one another by means of tie rods or anchor rods. The vertical formworks comprise anchors for fixing the tie rods to said formwork panels.

EP2126248A1 discloses a vertical formwork in which the anchors are fixed to the corresponding formwork panel by means of a threaded screw.

In order to prevent having to provide threaded holes in the formwork panel, patent document EP2875195A1 discloses a solution in which the threaded screw is replaced with a guided tilted screw housed in a non-threaded hole of the formwork panel.

### DISCLOSURE OF THE INVENTION

The object of the invention is to provide an anchor for a vertical formwork and a vertical formwork, as defined in the claims.

A first aspect of the invention relates to an anchor for a vertical formwork comprising a fixed part suitable for being fixed to a formwork panel, and fixing means for fixing said fixed part to the formwork panel.

The fixing means comprise a fixing key configured for being housed in a hole of the formwork panel, the fixing key comprising an off-centered stop with respect to the axis of rotation of the fixing key. In a first angular position the off-centered stop of the fixing key can be introduced in the hole of the formwork panel, and in a second angular position the off-centered stop is retained by the formwork panel, and therefore the anchor is fixed to the formwork panel.

A second aspect of the invention relates to a vertical formwork comprising two formwork panels which are arranged facing one another, each of said formwork panels comprising at least one hole for fixing an anchor. The vertical formwork also comprises an anchor fixed to each of said formwork panels, the anchor having the features described above.

The fixing means allow fixing the anchor to the formwork panel in an alternatively fast and simple manner.

These and other advantages and features of the invention will become evident in view of the drawings and the detailed description of the invention.

### DESCRIPTION OF THE DRAWINGS

Figure 1 shows a perspective view of an embodiment of the vertical formwork according to the invention.
Figure 2 shows a front view of the vertical formwork of Figure 1.
Figure 3 shows a first perspective view of an anchor of the vertical formwork of Figure 1.
Figure 4 shows a second perspective view of the anchor of Figure 3.
Figure 5 shows a perspective view of the fixing key of the anchor of Figure 3.
Figure 6 shows a detailed section view of the anchor of Figure 3.
Figure 7 shows a detailed section view of the anchor of Figure 3 supported against the formwork panel.
Figure 8 shows a detailed section view of the anchor of Figure 3 with the fixing key housed in the hole of the formwork panel, the fixing key being in the first angular position.
Figure 9 shows a detailed section view of the anchor of Figure 3 with the fixing key housed in the hole of the formwork panel, the fixing key being in the second angular position.
Figure 10 shows a detailed view of the housing of the anchor of Figure 3.
Figure 11 shows a detailed view of the structure of a formwork panel of the vertical formwork of Figure 1.

### DETAILED DISCLOSURE OF THE INVENTION

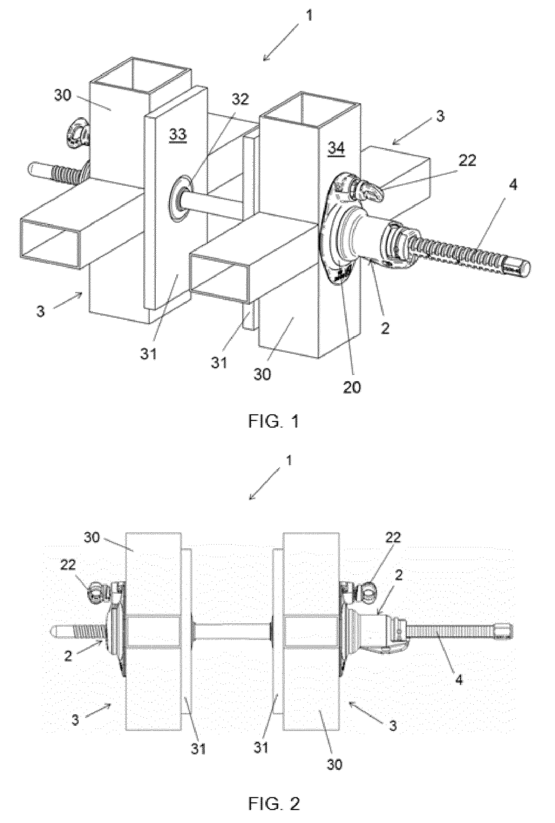

Figures 1 and 2 show an embodiment of the vertical formwork 1 according to the invention.

The vertical formwork 1 comprises two formwork panels 3 arranged facing one another, an anchor 2 fixed to each of said formwork panels 3, and a tie rod 4 fixed to the anchors 2 fixed in each of the formwork panels 3.

In this embodiment, both formwork panels 3 are identical. Each of said formwork panels 3 comprises a structure 30 and a board 31 fixed to said structure 30. In this embodiment, each formwork panel 3 comprises a housing extending from the outer face 34 to the inner face 33. To understand this document, the inner face 33 of the formwork panel 3 will be considered the face suitable for being arranged in contact with the concrete, and the outer face 34 of the formwork panel 3 will be considered the face opposite the inner face 33.

In this embodiment, a bushing 32 is arranged in the housing of each formwork panel. The bushing 32 forms a housing in which part of the corresponding anchor 2 is housed.

In other embodiments, depending on the dimensions of the formwork panel, each formwork panel can comprise a plurality of housings, a respective bushing and anchor being arranged in each of them, such that two facing formwork panels can be fixed to one another through a plurality of tie rods fixed to said anchors.

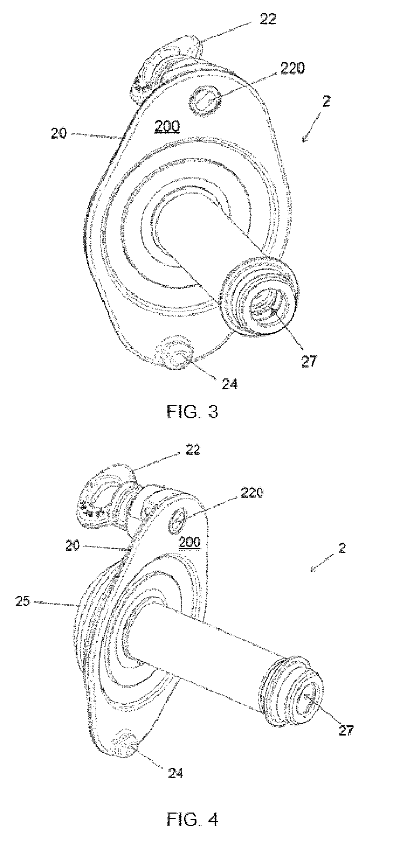

As mentioned above, the vertical formwork 1 comprises an anchor 2 suitable for being fixed to each of the formwork panels 3. Each anchor 2 comprises a housing 27 suitable for receiving part of the tie rod 4 fixing the formwork panels 3 facing one another. Figures 3 and 4 show the rear anchor 2 of Figures 1 and 2 in detail. The front anchor 2 has the same features as those described for the rear anchor 2.

The anchor 2 comprises a fixed part 20 suitable for being fixed to a formwork panel 3 and fixing means for fixing said fixed part 20 to the formwork panel 3.

In this embodiment, the fixed part 20 of each anchor 2 is supported on the outer face 34 of the corresponding formwork panel 3.

The fixing means comprise a fixing key 22 suitable for being housed in a hole 300 of the formwork panel 3. The fixing key 22 has the function that the screw has in anchors known in the prior art.

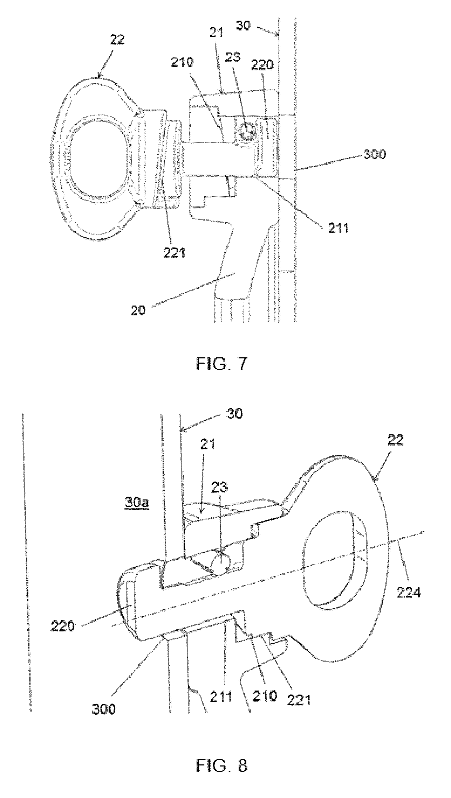

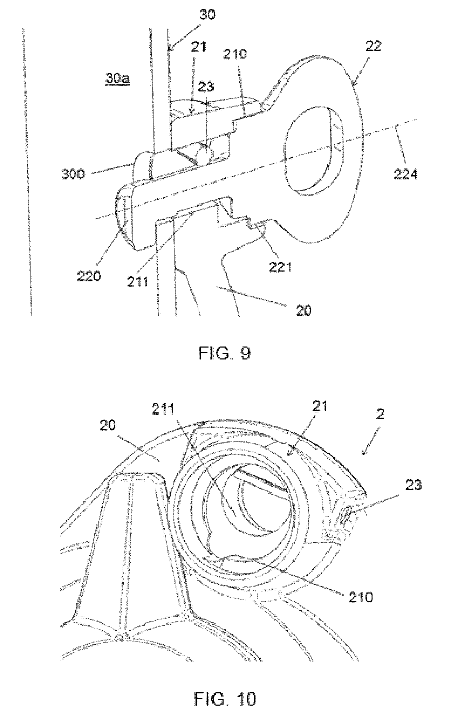

The fixing key 22 comprises an off-centered stop 220 with respect to the axis of rotation 224 of the fixing key 22, such that in a first angular position, shown in detail in Figure 8, the off-centered stop 220 of the fixing key 22 can be introduced in the hole 300 of the formwork panel 3, and in a second angular position, shown in detail in Figure 9, the off-centered stop 220 is retained by the formwork panel 3 and therefore the anchor 2 is fixed to the formwork panel 3. The hole 300 of the formwork panel 3 has a diameter greater than or equal to the diameter of the off-centered stop 220 of the fixing key 22.

In this embodiment, the fixed part 20 of the anchor 2 comprises a fixing housing 21, shown in detail in Figure 10, in which the fixing key 22 is arranged.

In this embodiment, when the fixing key 22 is introduced in the housing 300 of the formwork panel 3, in the first angular position, there is a gap between the supporting face 220a of the off-centered stop 220 of the fixing key 22 and the supporting face 30a of the structure 30 of the formwork panel 3. To eliminate said gap, the fixing means comprise backward motion means cooperating with the fixing key 22, such that when the fixing key 22 turns from the first angular position to the second angular position, the backward motion means make the fixing key 22 axially move backwards and therefore makes the fixing key 22 to be supported against the formwork panel 3 in the second angular position, i.e., the supporting face 220a of the off-centered stop 220 of the fixing key 22 is supported against the supporting face 30a of the structure 30 of the formwork panel 3.

In this embodiment, the backward motion means comprise a guide surface 210 arranged in the housing of the fixed part 20, and the fixing key 22 comprises a stop surface 221, said guide surface 210 and said stop surface 221 cooperating such that the fixing key 22 moves backwards when turning. In this embodiment, the guide surface 210 and the stop surface 221 are helical surfaces.

In other possible embodiments, the backward motion means may not be necessary and simply by turning the fixing key, the supporting face of the off-centered stop of the fixing key is supported against the supporting face of the structure of the formwork panel.

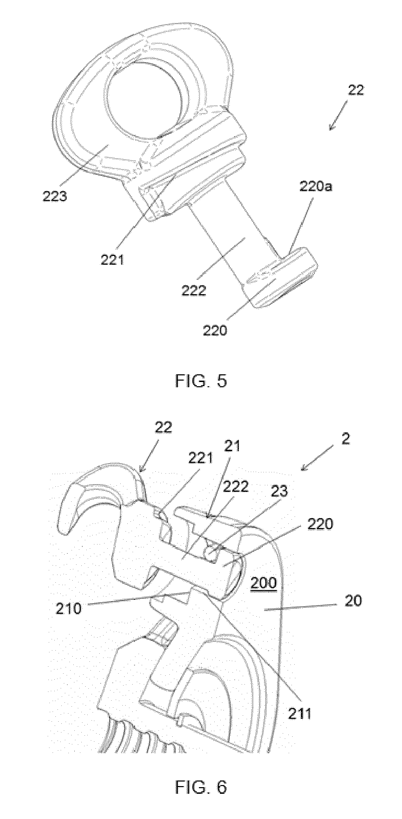

In this embodiment, the fixing key 22, shown in detail in Figure 5, comprises a shank 222, a first end of said shank 222 being fixed to the stop surface 221 and a second end of said shank 222 being fixed to the off-centered stop 220. The fixing key 22 also comprises a handle 223 after the stop surface 221. The handle 223 of the fixing key 22 projects from the fixing housing 21 of the fixed part 20 such that the operator can comfortably operate the fixing key 22.

In this embodiment, the fixing housing 21 of the fixed part 20 comprises a retaining element 23 that prevents the fixing key 22 from being separated from said fixing housing 21. The fixing housing 21 comprises a prolongation 211 after the guide surface 210, the retaining element 23 being arranged in said prolongation 211. In this embodiment, the retaining element 23 is a shaft that is transversely arranged in said prolongation 211. The retaining element 23 makes it impossible to lose the fixing key 22 with respect to the anchor 2, and therefore makes the operator's job easier.

In other embodiments, the housing can comprise retaining element of other types that prevent the fixing key from being separated from said housing.

As seen in Figure 6, in this embodiment, the retaining element 23 is arranged in the prolongation 211 such that it allows the off-centered stop 220 of the fixing key 22 to be housed entirely inside the prolongation 211 without projecting from the inner face 200 of the fixed part 20 of the anchor 2.

The fact that the fixing key 22 does not project from the inner face 200 of the fixed part 20 of the anchor 2 makes it easier to assemble the front anchor 2, since the operator can bring the anchor 2 closer until it is supported on the front formwork panel 3, and then introduce and turn the fixing key 22 in the hole 300 of the formwork panel 3 for fixing the anchor 2 to said formwork panel 3.

In this embodiment, the prolongation 211 of the fixing housing 21 and the off-centered stop 220 are cylindrical. The diameter of the prolongation 211 is the same as the diameter of the off-centered stop 220. It is thereby achieved that the surface area that is supported on the formwork panel 3 is maximum. In other embodiments, the diameter of the prolongation 211 could be greater than the diameter of the off-centered stop 220.

In this embodiment, the shank 222 of the fixing key 22 is also cylindrical. The diameter of the shank 222 is less than the diameter of the off-centered stop 220. The diameter of the shank 222 has to be smaller than the gap located between the retaining element 23 and the wall of the prolongation 211 of the fixing housing 21 so that the fixing key 22 can turn correctly between the first and second angular positions and vice versa.

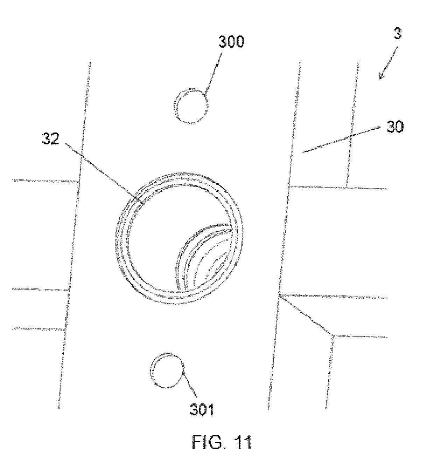

In this embodiment, in addition to the fixing key 22, the fixed part 20 comprises a pin 24 suitable for being housed in a second hole 301 of the formwork panel 3. The pin 24 projects from the inner face 200 of the fixed part 20. The formwork panel 3 comprises a second hole 301 in which said pin 24 can be housed. Therefore, when the pin 24 is housed in the second hole 301 of the formwork panel 3, it collaborates in fixing the anchor 2. It specifically prevents the anchor 2 from being able to rotate with respect to the corresponding formwork panel 3. Figure 11 shows the holes 300 and 301 of the formwork panel 3 in which the anchor 2 is fixed.

In other possible embodiments, the anchor 2 can comprise other ways of assuring that the anchor 2 does not rotate with respect to the formwork panel 3. For example, the anchor 2 can comprise two pins 24 projecting from the inner face 200 of the fixed part 20 and cooperating with two opposite ends of a profile of the structure of the formwork panel 3 in which the anchor 2 is fixed. In another possible embodiment, the anchor 2 could comprise two fixing keys 22 having the features described above, each of said fixing keys 22 being housed in a respective hole 300 of the formwork panel 3.

In this embodiment, the fixed part 20 of the anchor 2 comprises a spherical part with an opening. The anchor 2 also comprises a body 25 which is arranged in the opening of the spherical part of the fixed part 20. The body 25 comprises a first part having a spherically-shaped support wall coupled like a ball and socket joint to the spherical part of the fixed part 20, and a tubular extension after said first part.

In this embodiment, the body 25 of the anchor 2 comprises the housing 27 of the anchor 2.

As mentioned above, the first part of the body 25 has clearance like a ball and socket joint with the spherical part of the fixed part 20 in which said body 25 is arranged. This assures that when the outlet openings of the bushings 32 of the formwork panels 3 are not altogether aligned and therefore the tie rod 4 is arranged obliquely, the support wall of the body 25 is supported in its entirety on the fixed part 20.

## Claims

1. Anchor for a vertical formwork comprising
- a fixed part (20) suitable for being fixed to a formwork panel (3) and
- fixing means for fixing said fixed part (20) to the formwork panel (3), **characterized in that**
- the fixing means comprise a fixing key (22) configured for being housed in a hole (300) of the formwork panel (3), the fixing key (22) comprising an off-centered stop (220) with respect to the axis of rotation (224) of the fixing key (22), such that in a first angular position the off-centered stop (220) of the fixing key (22) can be introduced in the hole (300) of the formwork panel (3), and in a second angular position the off-centered stop (220) is retained by the formwork panel (3) and therefore the anchor (2) is fixed to the formwork panel (3).

2. Anchor according to claim 1, wherein the fixed part (20) of the anchor (2) comprises a fixing housing (21) in which the fixing key (22) is arranged.

3. Anchor according to claim 2, wherein the fixing means comprise backward motion means cooperating with the fixing key (22), such that when the fixing key (22) turns from the first angular position to the second angular position, the backward motion means make the fixing key (22) move backwards, and therefore in the second angular position the fixing key (22) is supported against the formwork panel (3).

4. Anchor according to claim 3, wherein the backward motion means comprise a guide surface (210) arranged in the fixing housing (21) of the fixed part (20), and the fixing key (22) comprises a stop surface (221), said guide surface (210) and said stop surface (221) cooperating such that the fixing key (22) axially moves backwards when turning.

5. Anchor according to claim 4, wherein the guide surface (210) and the stop surface (221) are helical surfaces.

6. Anchor according to any of claims 2 to 5, wherein the fixing housing (21) comprises a retaining element (23) that prevents the fixing key (22) from being separated from said fixing housing (21).

7. Anchor according to claim 6, wherein the retaining element (23) is arranged in the fixing housing (21) such that it allows the off-centered stop (220) of the fixing key (22) to be housed inside the housing (21) without projecting from the inner face (200) of the fixed part (20) of the anchor (2).

8. Anchor according to any of the preceding claims, wherein the fixed part (20) comprises a pin (24) suitable for being housed in a second hole (301) of the formwork panel (3).

9. Vertical formwork comprising at least
- two formwork panels (3) which are arranged facing one another, each of said formwork panels (3) comprising at least one hole (300) for fixing an anchor (2), and
- an anchor (2) according to any of the preceding claims fixed to each of said formwork panels (3).
